# EUROPÄISCHE PATENTSCHRIFT

(11) **EP 1 740 429 B1**
(45) Veröffentlichungstag und Bekanntmachung des Hinweises auf die Patenterteilung: **31.10.2007**
(21) Anmeldenummer: 05733489.8
(22) Anmeldetag: 15.04.2005
(51) Int. Cl.: B60T 13/74

(54) **VERFAHREN UND REGELSYSTEM ZUM AUFBRINGEN DEFINIERTER SPANNKRÄFTE**
METHOD AND CONTROL SYSTEM FOR APPLYING DEFINED TENSILE FORCES
PROCEDE ET SYSTEME DE REGULATION POUR APPLIQUER DES FORCES DE TENSION DEFINIES

(30) Priorität: 17.04.2004 DE 102004018728; 18.02.2005 DE 102005007446
(43) Veröffentlichungstag der Anmeldung: 10.01.2007
(73) Patentinhaber: Continental Teves AG & Co. oHG, 60488 Frankfurt (DE)
(72) Erfinder: MARON, Christof, 65779 Kelkheim (DE)
(86) Internationale Anmeldenummer: PCT/EP2005/051670
(87) Internationale Veröffentlichungsnummer: WO 2005/100113

(56) Entgegenhaltungen:
- WO-A-01/68428
- WO-A-03/011668
- DE-A1- 10 123 568
- DE-A1- 19 639 686
- DE-A1- 19 730 094
- US-A1- 2003 150 677

## Beschreibung

Die Erfindung betrifft ein Verfahren sowie ein Regelsystem zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), bei der ein Zusammenhang zwischen der Aktuatorposition und der Spannkraft besteht und bei dem mittels eines Spannkraftsensors sowie eines Lagesensors gemessene Werte der Spannkraft sowie der Aktuatorposition ermittelt werden.

Ein Verfahren sowie ein Regelsystem zum Aufbringen definierter Spannkräfte bei einer mittels eines Elektromotors über ein Untersetzungsgetriebe betätigbaren Scheibenbremse sind aus der internationalen Patentanmeldung WO 01/68428 oder WO 03/011668 bekannt. Das Besondere an dem vorbekannten Verfahren besteht darin, dass der vorhin erwähnte Zusammenhang zwischen der Aktuatorposition und der Spannkraft durch ein mathematisches Modell, vorzugsweise durch ein Polynom zweiter Ordnung dargestellt wird. Bei der Realisierung des bekannten Verfahrens, wird insbesondere im unteren Spannkraftbereich ein scharf eingestellter Regler verwendet, da der Verstärkungsfaktor des Aktuators in diesem Bereich immer kleiner wird. Ein scharf eingestellter Regler verstärkt aber eventuell auftretende, von außen eingeprägte Störungen im Kraftsensorsignal, so dass es im ungünstigen Fall zu einem unbefriedigenden Fahrkomfort kommt. Solche extern eingeprägten Störungen machen sich gerade im unteren Spannkraftbereich besonders bemerkbar, da der Kraftsensor an seiner unteren Erfassungsgrenze arbeitet. Eine Tiefpassfilterung des Spannkraftsignals kann die Störungen eliminieren. Allerdings resultiert hieraus eine verschlechterte Dynamik der Regelung, da das gefilterte Signal nur phasenverschoben zum Ursprungssignal vorliegt.

Es ist daher Aufgabe der vorliegenden Erfindung, ein Verfahren sowie ein Regelsystem vorzuschlagen, die es ermöglichen, die Regelgüte des eingangs erwähnten Regelsystems zu verbessern.

Die Aufgabe wird verfahrensmäßig dadurch gelöst, dass der Sollwert als auch der Istwert der Spannkraft in je einem Tiefpassfilter n-ter Ordnung gefiltert werden, dessen Eckfrequenz nicht konstant, sondern in Abhängigkeit von der aktuellen Aktuatordrehzahl und des gefilterten Aktuatorspannkraftsollwerts verändert wird, derart, dass bei schnellen Sollwertänderungen und hohen Drehzahlen, die insbesondere bei härteren Bremsvorgängen vorkommen, das Filter nur sehr schwach wirkt, während bei niedrigen Drehzahlen und langsamen Sollwertänderungen, die insbesondere im Komfortbremsbereich vorkommen, eine starke Filterung erfolgt, die die eventuell vorhandenen Störungen auf dem Kraftsensorsignal eliminiert. Die so gefilterten Spannkraftwerte werden dann mittels einer vorab definierten Kennlinie in einen Sollwert und einen Istwert der Aktuatorposition transformiert, mit dem Ziel, die nichtlineare Charakteristik des Aktuators zu linearisieren, so dass ein fest eingestellter Positionsregler für die Einstellung der gewünschten Spannkraft eingesetzt werden kann.

Zur Konkretisierung des erfindungsgemäßen Verfahrens erreicht die Eckfrequenz der Tiefpassfilter, ausgehend von einem vorgegebenen Maximalwert, mit abnehmendem Betrag der Aktuatordrehzahl von der Aktuator-Maximaldrehzahl bis zur Aktuatordrehzahl n = 0 einen vordefinierten Minimalwert. Die zur Transformation verwendete Kennlinie entspricht idealerweise der inversen Funktion eines vorab ermittelten Zusammenhangs zwischen der Aktuatorposition und der Spannkraft, so dass es zu einer Linearisierung des nichtlinearen Zusammenhangs zwischen Aktuatorposition und Aktuatorzuspannkraft kommt.

Eine vorteilhafte Weiterbildung des erfindungsgemäßen Verfahrens sieht vor, dass die Eckfrequenz der Tiefpassfilter auch in Abhängigkeit von der Änderung des Betrags des ungefilterten oder gefilterten Spannkraft-Sollwertes verändert wird.

Das erfindungsgemäße Regelsystem zur Durchführung des vorhin erläuterten Verfahrens besteht im wesentlichen aus
a) einem ersten Regler, dessen Ausgangsgröße einem Aktuatordrehzahl-Sollwert entspricht,
b) einem dem ersten Regler nachgeschalteten zweiten Regler (Drehzahlregler), dem als Eingangsgrößen den Aktuatordrehzahl-Sollwert und einen Aktuatordrehzahl-Istwert repräsentierende Signalen zugeführt werden und dessen Ausgangsgröße einem Aktuatordrehmoment-Sollwert entspricht, sowie
c) einem dem zweiten Regler nachgeschalteten dritten Regler (Stromregler), dem als Eingangsgrößen den Aktuatordrehmoment-Sollwert und einen Istwert des dem Aktuator zuzuführenden Stromes repräsentierende Signale zugeführt werden und dessen Ausgangsgröße eine Stellgröße zur Einstellung des Istwerts des dem Aktuator zuzuführenden Stromes darstellt.

Das erfindungsgemäße Regelsystem zeichnet sich vorzugsweise dadurch aus, dass Tiefpassfilter vorgesehen sind, denen der Sollwert sowie der Istwert der Spannkraft zugeführt werden und deren Ausgangsgrößen je einem Linearisierungsglied zugeführt werden, in dem die gefilterten Spannkraftwerte mittels einer vorab definierten Kennlinie in einen Sollwert und einen Istwert der Aktuatorposition transformiert werden, wobei der erste Regler als ein Lageregler ausgebildet ist, dem als Eingangsgrößen diese Aktuatorpositionswerte zugeführt werden.

Eine vorteilhafte Weiterbildung des Regelsystems zeichnet sich dadurch aus, dass ein Frequenzberechnungsmodul zur Berechnung der Eckfrequenz der Tiefpassfilter aus dem Istwert der Aktuatordrehzahl und dem gefilterten oder ungefilterten Sollwert der Spannkraft vorgesehen ist.

Weitere Einzelheiten, Merkmale und Vorteile der Erfindung gehen aus der nachfolgenden Beschreibung eines Ausführungsbeispiels unter Bezugnahme auf die beiliegende Zeichnung hervor, die eine Ausführung eines Regelkreises zur Durchführung des erfindungsgemäßen Verfahrens zeigt.

Das in der Zeichnung dargestellte Regelsystem besteht im wesentlichen aus einem ersten Regler 1, einem dem ersten Regler 1 nachgeschalteten zweiten Regler bzw. Drehzahlregler 2, sowie einem dem Drehzahlregler 2 nachgeschalteten dritten Regler bzw. Stromregler 3, mit einem integrierten Servoverstärker, der eine Spannung U erzeugt, die an einen lediglich schematisch angedeuteter Aktuator 4 einer elektromechanisch betätigbaren Bremse angelegt wird. Der Aktuator 4 ist vorzugsweise mit einem Spannkraftsensor 6, einem Positionsmeßsystem bzw. Lagesensor 5 sowie einem Stromsensor 7 ausgestattet, wobei das dem Aktuatorstrom-Istwert entsprechende Signal I_{Ist} des Stromsensors 7 als Eingangsgröße dem vorhin erwähnten Stromregler 3 zugeführt wird.

Das die gemessene Spannkraft bzw. den Istwert der Spannkraft repräsentierende Ausgangssignal F_{Mess} des Spannkraftsensors 6 wird einem Tiefpassfilter 10 zugeführt, dessen Ausgangsgröße F_{MessFilt} in einem Linearisierungsmodul 12 in ein den Istwert ϕ_{Mess} der Aktuatorposition repräsentierendes Signal transformiert wird. Ein vom Fahrzeugführer vorgegebenes, den Sollwert der Spannkraft repräsentierendes Signal F_{Soll} wird einem Tiefpassfilter 9 zugeführt, dessen Ausgangsgröße F_{SollFilt} in einem Linearisierungsmodul 11 in ein den Sollwert ϕ_{Soll} der Aktuatorposition repräsentierendes Signal transformiert wird. Die vorhin erwähnten Größen ϕ_{Soll} und ϕ_{Ist} werden als Eingangsgrößen dem ersten Regler 1 zugeführt, der als Lageregler ausgebildet ist.

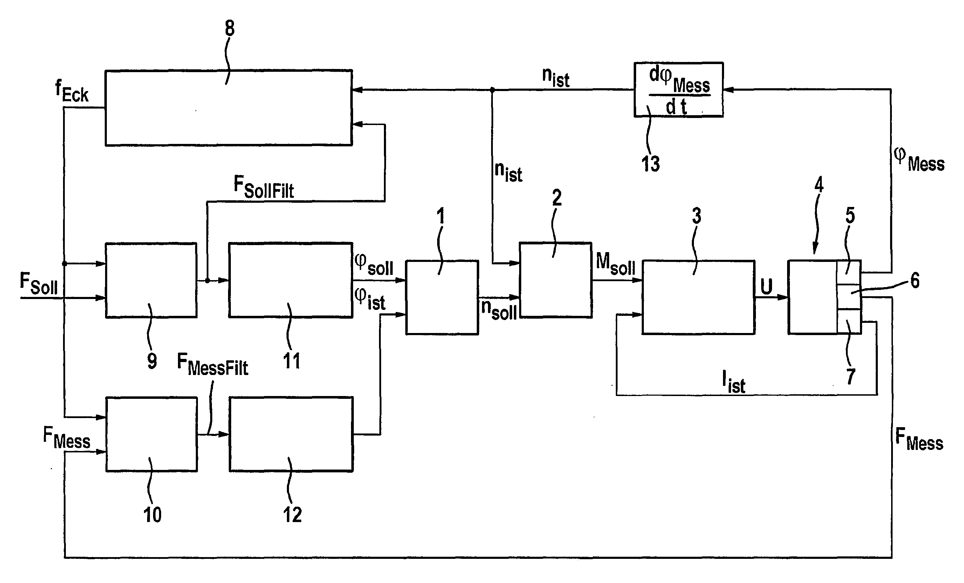

Weiterhin ist Fig. 1 zu entnehmen, dass das der gemessenen Aktuatorposition entsprechende Signal ϕ_{Mess} in einem Differenzierer 13 nach der Zeit differenziert wird, wodurch ein Aktuatordrehzahl-Istwert n_{Ist} gebildet wird. Der Aktuatordrehzahl-Istwert n_{Ist} bildet eine erste Eingangsgröße des Drehzahlreglers 2, dessen zweite Eingangsgröße durch die Ausgangsgröße n_{Soll} des vorhin erwähnten ersten Reglers bzw. Lagereglers 1 gebildet wird. Die Ausgangsgröße des Drehzahlreglers 2 entspricht einem Sollwert M_{Soll} des vom Aktuator 4 aufgebrachten Bremsmoments.

Der Aktuatordrehzahl-Istwert n_{Ist} wird außerdem zusammen mit der Ausgangsgröße des Tiefpassfilters 9 F_{SollFilt} einem Frequenzberechnungsmodul 8 zugeführt, in dem Eckfrequenzwerte f_{Eck} für die beiden Tiefpassfilter 9 und 10 berechnet werden.

Mit Hilfe des erfindungsgemäßen Verfahrens ist es nicht nur gelungen, die Linearisierung vollständig durchzuführen, sondern auch den Einfluss von extern eingestreuten Störungen im unteren Kraftbereich bei Komfortbremsungen deutlich zu reduzieren, ohne an Dynamik zu verlieren.

## Patentansprüche

1. Verfahren zum Aufbringen definierter Spannkräfte bei einer mittels eines Aktuators (4) elektrisch betätigbaren Bremse mit einer ersten Reibfläche (Reibbelag) sowie einer zweiten Reibfläche (Bremsscheibe), bei der ein Zusammenhang zwischen der Aktuatorposition (ϕ_{Mess}) und der Spannkraft (F_{Mess}) besteht und bei der mittels eines Spannkraftsensors (6) sowie eines Lagesensors (5) gemessene Werte der Spannkraft (F_{Mess}) sowie der Aktuatorposition (ϕ_{Mess}) ermittelt werden, **dadurch gekennzeichnet, dass** der Sollwert (F_{Soll}) als auch der Istwert (F_{Mess}) der Spannkraft in je einem Tiefpassfilter (9, 10) n-ter Ordnung gefiltert werden, dessen Eckfrequenz aus einem Zusammenhang zwischen dem Istwert (n_{Ist}) der Aktuatordrehzahl und dem gefilterten Wert (F_{SollFilt}) der Spannkraft bestimmt wird, und dass die gefilterten Werte (F_{SollFilt}, F_{MessFilt}) der Spannkraft mittels einer vorab definierten Kennlinie in einen Sollwert (ϕ_{Soll}) und einen Istwert (ϕᵢₛₜ) der Aktuatorposition transformiert werden.

2. Verfahren nach Anspruch 1 **dadurch gekennzeichnet, dass** der Sollwert (ϕ_{Soll}) und der Istwert (ϕᵢₛₜ) der Aktuatorposition als Eingangsgrößen einem fest eingestellten Positionsregler zugeführt werden, in dem ein Sollwert (n_{Soll}) der Aktuatordrehzahl (n) gebildet wird.

3. Verfahren nach Anspruch 1 oder 2 **dadurch gekennzeichnet, dass** die Eckfrequenz (f_{Eck}) der Tiefpassfilter (9, 10) ausgehend von einem vorgegebenen Maximalwert, mit abnehmendem Betrag der Aktuatordrehzahl (n) von der Aktuator-Maximaldrehzahl bis zur Aktuatordrehzahl n = 0 einen vordefinierten Minimalwert erreicht.

4. Verfahren nach einem der Ansprüche 1 bis 3 **dadurch gekennzeichnet, dass** die Eckfrequenz (f_{Eck}) der Tiefpassfilter (9, 10) in Abhängigkeit von der Änderung des Betrags des gefilterten Sollwertes (F_{SollFilt}) der Spannkraft verändert wird.

5. Verfahren nach einem der Ansprüche 1 bis 3 **dadurch gekennzeichnet, dass** die Eckfrequenz (f_{Eck}) der Tiefpassfilter (9, 10) in Abhängigkeit von der Änderung des Betrags des ungefilterten Sollwertes (F_{SollFilt}) der Spannkraft verändert wird.

6. Verfahren nach einem der Ansprüche 1 bis 5 **dadurch gekennzeichnet, dass** als die vorab definierte Kennlinie die inverse Funktion eines vorab ermittelten Zusammenhangs zwischen der Aktuatorposition (ϕ_{Mess}) und der Spannkraft (F_{Mess}) verwendet wird.

7. Regelsystem zum Aufbringen definierter Spannkräfte bei einer mittels eines Aktuators elektrisch betätigbaren Bremse mit einer ersten Reibfläche (Reibbelag) sowie einer zweiten Reibfläche (Bremsscheibe), bei der ein Zusammenhang zwischen der Aktuatorposition (ϕ_{Mess}) und der Spannkraft (F_{Mess}) besteht, mit einem Spannkraftsensor zur Ermittlung der Spannkraft (F_{Mess}) sowie einem Lagesensor zur Ermittlung der Aktuatorposition (ϕ_{Mess}), mit einem ersten Regler (1), dessen Ausgangsgröße einem Aktuatordrehzahl-Sollwert (n_{Soll}) entspricht, einem dem ersten Regler nachgeschalteten zweiten Regler (2) (Drehzahlregler), dem als Eingangsgrößen den Aktuatordrehzahl-Sollwert (n_{Soll}) und einen Aktuatordrehzahl-Istwert (n_{Ist}) repräsentierende Signalen zugeführt werden und dessen Ausgangsgröße einem Aktuatordrehmoment-Sollwert (M_{Soll}) entspricht, sowie einem dem zweiten Regler nachgeschalteten dritten Regler (3) (Stromregler), dem als Eingangsgrößen den Aktuatordrehmoment-Sollwert (M_{Soll}) und einen Istwert (I_{Ist}) des dem Aktuator zuzuführenden Stromes repräsentierende Signalen zugeführt werden und dessen Ausgangsgröße eine Stellgröße (U) zur Einstellung des Istwerts (I_{Ist}) des dem Aktuator zuzuführenden Stromes darstellt, **dadurch gekennzeichnet, dass** Tiefpassfilter (9, 10) vorgesehen sind, denen der Sollwert (F_{Soll}) sowie der Istwert (F_{Mess}) der Spannkraft zugeführt werden und deren Ausgangsgrößen (F_{SollFilt}) sowie (F_{MessFilt}) je einem Linearisierungsmodul (11, 12) zugeführt werden, in dem die gefilterten Spannkraftwerte mittels einer vorab definierten Kennlinie in einen Sollwert (ϕ_{Soll}) und einen Istwert (ϕ_{Ist}) der Aktuatorposition transformiert werden, wobei der erste Regler (1) als ein Lageregler ausgebildet ist, dem als Eingangsgrößen die Aktuatorpositionswerte (ϕ_{Soll}, ϕ_{Ist}) zugeführt werden.

8. Regelsystem nach Anspruch 7 **dadurch gekennzeichnet, dass** ein Frequenzberechnungsmodul (8) zur Berechnung der Eckfrequenz der Tiefpassfilter (9, 10) aus dem Istwert der Aktuatordrehzahl (n_{Ist}) und dem gefilterten Sollwert (F_{SollFilt}) der Spannkraft vorgesehen ist.

## Claims

1. Method of applying defined clamping forces in a brake that is electrically operable by means of an actuator (4) and includes a first friction surface (friction lining) and a second friction surface (brake disc), wherein a correlation exists between the actuator position (ϕₘₑₐₛ) and the clamping force (Fₘₑₐₛ), and wherein values of the clamping force (Fₘₑₐₛ) as well as of the actuator position (ϕₘₑₐₛ) are determined, the values being measured by means of a clamping force sensor (6) and a position sensor (5), **characterized in that** the nominal value (Fₙₒₘᵢₙₐₗ) and the actual value (Fₘₑₐₛ) of the clamping force are filtered in each one low-pass filter (9, 10) of nth order, whose limit frequency is determined from a correlation between the actual value (n_{actual}) of the actuator speed and the filtered value (F_{nominalFilt}) of the clamping force, and **in that** the filtered values (F_{nominalFilt}, (F_{measFilt}) of the clamping force are transformed by means of a predefined characteristic curve into a nominal value (ϕₙₒₘᵢₙₐₗ) and an actual value ((ϕ_{actual}) of the actuator position.

2. Method as claimed in claim 1,
**characterized in that** the nominal value (ϕₙₒₘᵢₙₐₗ) and the actual value ((ϕ_{actual}) of the actuator position are sent as input quantities to an invariably adjusted position controller, in which a nominal value (nₙₒₘᵢₙₐₗ) of the actuator speed (n) is produced.

3. Method as claimed in claim 1 or 2,
**characterized in that** the limit frequency (fₗᵢₘᵢₜ) of the low-pass filters (9, 10), based on a predetermined maximum value, reaches a predefined minimum value with a decreasing amount of the actuator rotational speed (n) from the actuator maximum rotational speed until the actuator rotational speed n = 0.

4. Method as claimed in any one of claims 1 to 3,
**characterized in that** the limit frequency (fₗᵢₘᵢₜ) of the low-pass filters (9, 10) is changed in response to the change of the amount of the filtered nominal value (F_{nominalFilt}) of the clamping force.

5. Method as claimed in any one of claims 1 to 3,
**characterized in that** the limit frequency (fₗᵢₘᵢₜ) of the low-pass filters (9, 10) is changed in response to the change of the amount of the unfiltered nominal value (F_{nominalFilt}) of the clamping force.

6. Method as claimed in any one of claims 1 to 5,
**characterized in that** the inverse function of a predetermined correlation between the actuator position (ϕₘₑₐₛ) and the clamping force (Fₘₑₐₛ) is used as the predefined characteristic curve.

7. Control system for applying defined clamping forces in a brake that is electrically operable by means of an actuator and includes a first friction surface (friction lining) and a second friction surface (brake disc), wherein a correlation exists between the actuator position (ϕₘₑₐₛ) and the clamping force (Fₘₑₐₛ), including a clamping force sensor to determine the clamping force (Fₘₑₐₛ) and a position sensor to determine the actuator position (ϕₘₑₐₛ), including a first controller (1), the output quantity of which corresponds to an actuator speed nominal value (nₙₒₘᵢₙₐₗ), a second controller 2 (speed controller) that is connected downstream of the first controller and to which signals representative of the actuator speed nominal value (nₙₒₘᵢₙₐₗ) and an actuator speed actual value (n_{actual}) are sent as input quantities, the output quantity of said controller corresponding to an actuator torque nominal value (Mₙₒₘᵢₙₐₗ), as well as a third controller (3) (current controller) that is connected downstream of the second controller and to which signals representative of the actuator torque nominal value (Mₙₒₘᵢₙₐₗ) and an actual value (I_{actual}) of the current to be supplied to the actuator are sent as input quantities, the output quantity of said controller representing a correcting variable (U) for adjusting the actual value (I_{actual}) of the current to be supplied to the actuator,
**characterized in that** there are provided low-pass filters (9, 10) to which are sent the nominal value (Fₙₒₘᵢₙₐₗ) and the actual value (Fₘₑₐₛ) of the clamping force, and the output quantities (F_{nominalFilt}) and (F_{measFilt}) of which are sent to each one linearization module (11, 12) in which the filtered clamping force values are transformed into a nominal value (ϕₙₒₘᵢₙₐₗ) and an actual value ((ϕ_{actual}) of the actuator position by means of a predefined characteristic curve, the first controller (1) being configured as a position controller which is furnished with the actuator position values (ϕₙₒₘᵢₙₐₗ, (ϕ_{actual}) as input quantities.

8. Control system as claimed in claim 7,
**characterized in that** a frequency calculation module (8) for calculating the limit frequency of the low-pass filters (9, 10) based on the actual value of the actuator speed (n_{actual}) and the filtered nominal value (F_{nominalFilt}) of the clamping force is provided.

## Revendications

1. Procédé pour appliquer des forces de serrage définies dans un frein, pouvant être actionné électriquement au moyen d'un actionneur (4), avec une première surface de friction (garniture de friction) ainsi qu'une seconde surface de friction (disque de frein), dans lequel il existe une relation entre la position de l'actionneur (ϕ_{Mess}) et la force de serrage (F_{Mess}), et dans lequel des valeurs, mesurées au moyen d'un capteur de force de serrage (6) et d'un capteur de position (5), de la force de serrage (F_{Mess}) et de la position d'actionneur (ϕ_{Mess}), sont déterminées, **caractérisé en ce que** la valeur de consigne (F_{Soll}) ainsi que la valeur réelle (F_{Mess}) de la force de serrage sont filtrées chacune dans un filtre passe-bas (9, 10) de n-ième ordre dont la fréquence d'angle est déterminée à partir d'une relation entre la valeur réelle (n_{Ist}) de la vitesse de rotation de l'actionneur et la valeur filtrée (F_{SollFilt}) de la force de serrage, et **en ce que** les valeurs filtrées (F_{SollFilt}, F_{MessFilt}) de la force de serrage sont transformées, au moyen d'une courbe caractéristique définie au préalable, en une valeur de consigne (ϕ_{Soll}) et une valeur réelle (ϕ_{Ist}) de la position d'actionneur.

2. Procédé selon la revendication 1, **caractérisé en ce que** la valeur de consigne (ϕ_{Soll}) et la valeur réelle (ϕ_{Ist}) de la position d'actionneur sont amenées, en tant que grandeurs d'entrée, à un régulateur de position réglé de manière fixe, dans lequel est formée une valeur de consigne (n_{Soll}) de la vitesse de rotation d'actionneur (n).

3. Procédé selon la revendication 1 ou 2, **caractérisé en ce que** la fréquence d'angle (f_{Eck}) des filtres passe-bas (9, 10) atteint, à partir d'une valeur maximale prédéfinie, une valeur minimale prédéfinie lorsque la valeur de la vitesse de rotation d'actionneur (n) diminue de la vitesse de rotation maximale d'actionneur à la vitesse de rotation d'actionneur n=0.

4. Procédé selon l'une des revendications 1 à 3, **caractérisé en ce que** la fréquence d'angle (f_{Eck}) des filtres passe-bas (9, 10) est modifiée en fonction de la variation du montant de la valeur de consigne filtrée (F_{SollFilt}) de la force de serrage.

5. Procédé selon l'une des revendications 1 à 3, **caractérisé en ce que** la fréquence d'angle (f_{Eck}) des filtres passe-bas (9, 10) est modifiée en fonction de la variation du montant de la valeur de consigne non filtrée (F_{SollFilt}) de la force de serrage.

6. Procédé selon l'une des revendications 1 à 5, **caractérisé en ce que** la fonction inverse d'une relation déterminée au préalable entre la position d'actionneur (ϕ_{Mess}) et la force de serrage (F_{Mess}) est utilisée comme courbe caractéristique définie au préalable.

7. Système de régulation pour appliquer des forces de serrage définies dans un frein, pouvant être actionné électriquement au moyen d'un actionneur, avec une première surface de friction (garniture de friction) ainsi qu'une deuxième surface de friction (disque de freinage) dans lequel il existe une relation entre la position de l'actionneur (ϕ_{Mess}) et la force de serrage (F_{Mess}), comportant un capteur de force de serrage pour déterminer la force de serrage (F_{Mess}) ainsi qu'un capteur de position pour déterminer la position d'actionneur (ϕ_{Mess}), comportant un premier régulateur (1) dont la grandeur de sortie correspond à une valeur de consigne de vitesse de rotation d'actionneur (n_{Soll}), un deuxième régulateur (2) (régulateur de vitesse de rotation), couplé en aval du premier régulateur, auquel sont amenés, en tant que grandeur d'entrée, des signaux représentant la valeur de consigne de vitesse de rotation d'actionneur (n_{Soll}) et une valeur réelle de vitesse de rotation d'actionneur (n_{Ist}), et dont la grandeur de sortie correspond à une valeur de consigne de couple de rotation d'actionneur (M_{Soll}), ainsi qu'un troisième régulateur (3) (régulateur de courant) couplé en aval du deuxième régulateur auquel sont amenés, en tant que grandeurs d'entrée, des signaux représentant la valeur de consigne de couple de rotation d'actionneur (M_{Soll}) et une valeur réelle (I_{Ist}) du courant à amener à l'actionneur, et dont la grandeur d'entrée constitue une grandeur de réglage (U) pour régler la valeur réelle (I_{Ist}) du courant à amener à l'actionneur, **caractérisé en ce que** sont prévus des filtres passe-bas (9, 10) auxquels sont amenées la valeur de consigne (F_{Soll}) ainsi que la valeur réelle (F_{Mess}) de la force de serrage et dont les grandeurs de sortie (F_{SollFilt}) ainsi que (F_{MessFilt}) sont envoyées respectivement à un module de linéarisation (11, 12) dans lequel les valeurs de force de serrage filtrées sont transformées, au moyen d'une courbe caractéristique définie au préalable, en une valeur de consigne (ϕ_{Soll}) et une valeur réelle (ϕ_{Ist}) de la position d'actionneur, le premier régulateur (1) étant réalisé en tant que régulateur de position auquel sont amenées, en tant que grandeurs d'entrée, les valeurs de position d'actionneur (ϕ_{Soll}, ϕ_{Ist}).

8. Système de régulation selon la revendication 7, **caractérisé en ce qu'**il est prévu un module de calcul de fréquence (8) pour calculer la fréquence d'angle des filtres passe-bas (9, 10) à partir de la valeur réelle de la vitesse de rotation d'actionneur (n_{Ist}) et de la valeur de consigne filtrée (F_{SollFilt}) de la force de serrage.
